# EUROPÄISCHE PATENTSCHRIFT

(11) **EP 3 645 249 B1**
(45) Veröffentlichungstag und Bekanntmachung des Hinweises auf die Patenterteilung: **08.09.2021**
(21) Anmeldenummer: 18732127.8
(22) Anmeldetag: 26.06.2018
(51) Int. Cl.: B29C 64/393, B29C 64/118, B33Y 10/00, B33Y 50/02

(54) **3D-DRUCKVERFAHREN MIT PFADABHÄNGIGER STEUERUNG DES DRUCKPFADES**
3D PRINTING METHOD WITH PATH -DEPENDENT CONTROL OF THE PRINTING PATH
PROCÉDÉ 3D FAISANT APPEL À LA COMMANDE EN FONCTION DU CHEMIN D'IMPRESSION

(30) Priorität: 27.06.2017 EP 17178020
(43) Veröffentlichungstag der Anmeldung: 06.05.2020
(73) Patentinhaber: Covestro Deutschland AG, 51373 Leverkusen (DE)
(72) Erfinder: ACHTEN, Dirk, 51375 Leverkusen (DE); BÜSGEN, Thomas, 51377 Leverkusen (DE); AKBAS, Levent, 58455 Witten (DE); WAGNER, Roland, 51375 Leverkusen (DE); DEGIORGIO, Nicolas, 47807 Krefeld (DE); KÜNZEL, Jonas, 51381 Leverkusen (DE)
(74) Vertreter: Levpat
(86) Internationale Anmeldenummer: PCT/EP2018/067074
(87) Internationale Veröffentlichungsnummer: WO 2019/002271

(56) Entgegenhaltungen:
- US-A- 6 054 077
- US-A1- 2013 009 338
- US-A1- 2015 097 308

## Beschreibung

Die vorliegende Erfindung betrifft ein Verfahren zur Herstellung eines Gegenstands aus einem filamentförmigen Aufbaumaterial in einem additiven Schmelzschichtungsverfahren, umfassend die Schritte: Bereitstellen des Aufbaumaterials; Fördern des Aufbaumaterials in einen Druckkopf mit einer Vorschubgeschwindigkeit für das Aufbaumaterial, wobei das Aufbaumaterial zwischen einem angetriebenen Antriebsrad und einem zweiten Rad gefördert wird; Schmelzen des Aufbaumaterials mittels einer Heizeinrichtung in dem Druckkopf; Austragen des geschmolzenen Aufbaumaterials auf einen Austragsort, entsprechend einem ausgewählten Querschnitt des herzustellenden Gegenstands, mit einer Austragsrate durch eine Öffnung des Druckkopfs, unter relativer Bewegung des Druckkopfes zum Austragsort mit einer vorbestimmten Bewegungsgeschwindigkeit entlang eines vorbestimmten Pfades, wobei der Pfad an jedem Ort eine Krümmung aufweist, welche einen positiven Wert, Null oder einen negativen Wert einnehmen kann; wobei eine Steuerungseinheit wenigstens den Antrieb des Antriebsrades, die Heizeinrichtung in dem Druckkopf und die Bewegung des Druckkopfes steuert. Die Erfindung betrifft ebenfalls eine Steuerungseinheit zur Verwendung in einer Anlage zur Durchführung eines additiven Schmelzschichtungsverfahrens mit einem filamentförmigen Aufbaumaterial.

Als additive Fertigungsverfahren oder 3D-Druckverfahren werden solche Verfahren bezeichnet, mit denen Gegenstände schichtweise aufgebaut werden. Sie unterscheiden sich daher deutlich von anderen Verfahren zur Herstellung von Gegenständen wie Fräsen oder Bohren. Bei letztgenannten Verfahren wird ein Gegenstand so bearbeitet, dass er durch Wegnahme von Material seine Endgeometrie erhält.

Additive Fertigungsverfahren nutzen unterschiedliche Materialien und Prozesstechniken, um Gegenstände schichtweise aufzubauen. Beim sogenannten Fused Deposition Modeling (FDM) oder Schmelzschichtungsverfahren beispielsweise wird ein thermoplastischer Kunststoffdraht verflüssigt und mit Hilfe einer Düse schichtweise auf einer beweglichen Bauplattform abgelegt. Beim Erstarren entsteht ein fester Gegenstand. Die Steuerung der Düse und der Bauplattform erfolgt auf der Grundlage einer CAD-Zeichnung des Gegenstands. Ein frühes Patentdokument für diese Technologie ist US 5,121,329. Ist die Geometrie dieses Gegenstands komplex, zum Beispiel mit geometrischen Hinterschneidungen, müssen zusätzlich Stützmaterialien mitgedruckt und nach Fertigstellung des Gegenstands wieder entfernt werden.

Eine dynamische Steuerung des Druckvorgangs ist beispielsweise Gegenstand von US 2015/097308 A1. Diese Patentanmeldung offenbart ein additives Fertigungssystem zum schichtweisen Drucken von dreidimensionalen Teilen, umfassend: ein zum Bereitstellen eines Verbrauchsmaterials eingerichtetes Antriebssystem; ein zum Empfangen des Verbrauchsmaterials eingerichtetes Verflüssigungsrohr; eine zum Aufschmelzen des Verbrauchsmaterials eingerichtete Heizeinrichtung; eine zum Extrudieren des geschmolzenen Verbrauchsmaterials eingerichtete Düse; wenigstens einen zum Messen des Drucks innerhalb des Verflüssigungsrohrs eingerichteten Sensor und eine Kontrolleinrichtung, die eingerichtet ist, um Zufuhrraten des Verbrauchsmaterials durch den Antriebsmechanismus auf Basis des gemessenen Drucks anzupassen. Die Materialflussrate des Extrudats wird in einem geschlossenen Regelkreislauf kontrolliert.

Eine andere Art der Steuerung des Druckvorgangs ist Gegenstand von US 2015/0266244 A1. Diese Patentanmeldung betrifft ein System zur Herstellung eines Objektes mit einem Extruder für ein oder mehrere Aufbaumaterialien. Der Extruder weist wenigstens eine Düse mit einer Düsenspitze auf, welche eine Ausgangsöffnung besitzt und eine Länge aufweist, die größer oder gleich der Breite der Ausgangsöffnung ist. Das System weist ferner eine mit dem Extruder gekoppelte Steuerung auf, welche eingerichtet ist um einen Korrekturfaktor anzuwenden, der für einen Pfad der Düse aufgrund einer Neigung der Oberfläche des herzustellenden Objekts berechnet wurde. Der Korrekturfaktor für eine positive Neigung ist von dem für eine negative Neigung verschieden. Der Extruder ist eingerichtet, um eine Bewegung der Düse entlang des Pfades zu bewirken, um Material auf der Neigung der Oberfläche abzulegen. Der Korrekturfaktor beseitigt Unterschiede in der Dicke des abgelegten Materials, die durch die Neigung relativ zum Pfad verursacht werden. US 6,054,077 beschreibt Geschwindigkeitsprofile in einer Extrusionsvorrichtung. Eine Vorrichtung weist auf: einen Extrusionskopf zur Extrusion eines verflüssigten Materials bei einer Extrusionspumpenrate, einen Extrusionskopfmotor zur Bewegung des Extrusionskopfes mit einer variablen Kopfgeschwindigkeit, eine Pumpe zur Bereitstellung von verflüssigtem Material zum Extrusionskopf und eine Steuerung zur Bereitstellung von Steuerungssignalen zum Extrusionskopf und zur Pumpe. Die Steuerungssignale steuern den Betrieb des Extrusionskopfmotors und der Pumpe, so dass die Kopfgeschwindigkeit verknüpft ist mit einem geschätzten Profil von Extrusionspumpenrate dividiert durch eine vorbestimmte Querschnittsfläche des verflüssigten Materials.

Erfindungsgemäß gelöst wird die Aufgabe durch Verfahren mit den Merkmalen des Anspruchs 1 und eine Steuerungseinheit mit den Merkmalen des Anspruchs 13. Bevorzugte Ausführungsformen des erfindungsgemäßen Verfahrens sind in den Unteransprüchen angegeben. Sie können beliebig kombiniert werden, sofern sich aus dem Kontext nicht eindeutig das Gegenteil ergibt.

Ein Verfahren zur Herstellung eines Gegenstands aus einem filamentförmigen Aufbaumaterial in einem additiven Schmelzschichtungsverfahren umfasst die Schritte:
- Bereitstellen des Aufbaumaterials;
- Fördern des Aufbaumaterials in einen Druckkopf mit einer Vorschubgeschwindigkeit für das Aufbaumaterial;
- Schmelzen des Aufbaumaterials mittels einer Heizeinrichtung in dem Druckkopf;
- Austragen des geschmolzenen Aufbaumaterials auf einen Austragsort, entsprechend einem ausgewählten Querschnitt des herzustellenden Gegenstands,
   mit einer Austragsrate
      durch eine Öffnung des Druckkopfs,
      unter relativer Bewegung des Druckkopfes zum Austragsort
   mit einer vorbestimmten Bewegungsgeschwindigkeit
      entlang eines vorbestimmten Pfades,
      wobei der Pfad an jedem Ort eine Krümmung aufweist, welche einen positiven Wert, Null oder einen negativen Wert einnehmen kann;
   wobei eine Steuerungseinheit wenigstens die Förderung des Aufbaumaterials, die Heizeinrichtung in dem Druckkopf und die Bewegung des Druckkopfes steuert.
   Erfindungsgemäß offenbart das Verfahren, dass in Abhängigkeit der Krümmung des Pfades an dem Ort, an dem der Druckkopf sich während seiner relativen Bewegung zum Austragsort befindet:
   die Steuerungseinheit die relative Bewegung des Druckkopfes derart steuert, dass
   die Geschwindigkeit, mit der der Druckkopf eine relative Bewegung erfährt,
   negativ mit dem Betrag der Krümmung korreliert, die Steuereinheit die Vorschubgeschwindigkeit für das Aufbaumaterial derart steuert, dass
   die Vorschubgeschwindigkeit
   negativ mit dem Betrag der Krümmung korreliert und die Steuerungseinheit die Heizeinrichtung im Druckkopf derart steuert, dass
   die Temperatur der Heizeinrichtung positiv mit der Vorschubgeschwindigkeit für das Aufbaumaterial und/oder positiv mit der Geschwindigkeit, mit der der Druckkopf eine relative Bewegung erfährt, korreliert.

Im erfindungsgemäßen Verfahren wird ein Gegenstand schichtweise aufgebaut. Insofern handelt es sich um ein Schmelzschichtungs- oder Fused Deposition Modeling (FDM)-Verfahren. Die Abfolge der Schritte im erfindungsgemäßen Verfahren wird solange wiederholt, bis der Gegenstand gebildet ist. Wenn die Anzahl der Wiederholungen für das Auftragen hinreichend gering ist, kann auch von einem zweidimensionalen Gegenstand gesprochen werden, der aufgebaut werden soll. Solch ein zweidimensionaler Gegenstand lässt sich auch als Beschichtung charakterisieren. Beispielsweise können zu dessen Aufbau ≥ 2 bis ≤ 20 Wiederholungen für das Auftragen durchgeführt werden.

Ein elektronisches Modell des zu bildenden Gegenstands liegt zweckmäßigerweise in einem CAD-Programm vor. Das CAD-Programm kann dann Querschnitte des Modells berechnen, die durch Auftragen des Filaments zu Querschnitten des Gegenstands werden.

Die einzelnen Filamente, welche aufgetragen werden, können beispielsweise einen Durchmesser von ≥ 50 µm bis ≤ 5000 µm aufweisen.

Das Aufbaumaterial kann ein schmelzbares Polymer enthalten, welches ausgewählt ist aus der Gruppe bestehend aus Polyurethan, Polyester, Polyalkylenoxid, weichgemachtes PVC, Polyamid, Protein, PEEK, PEAK, Polypropylen, Polyethylen, Thermoplastisches Elastomer, POM, Polyacrylat, Polycarbonat, Polymethylmethacrylat, Polystyrol, ABS, Polyamid, Copolyesteramid, thermoplastische Elastomere, thermoplastische Polyurethanelastomere, oder einer Kombination aus mindestens zwei hiervon.

Neben dem schmelzbaren Polymer kann das Aufbaumaterial noch weitere Additive wie Füllstoffe, Stabilisatoren und dergleichen, aber auch weitere Polymere, enthalten. Der Gesamtgehalt an Additiven in der Schicht kann beispielsweise ≥ 0,1 Gewichts-% bis ≤ 50 Gewichts-%, bevorzugt ≥ 0,3 Gewichts-% bis ≤ 25 Gewichts-% besonders bevorzugt 0,5 bis 15 Gewichts%, betragen.

Im erfindungsgemäßen Verfahren wird das bereitgestellte Aufbaumaterial in einen Druckkopf, der im einfachsten Fall als eine steuerbare Extrusionsdüse angesehen werden kann, hinein gefördert. Als Antrieb für die Förderung dienen zum Beispiel ein angetriebenes Rad (Antriebsrad) und ein zweites Rad, welches ebenfalls angetrieben sein kann oder auch nicht angetrieben sein kann. Das Aufbaumaterial befindet sich dann zwischen diesen Rädern und wird zumindest durch die Bewegung des Antriebsrades in den Druckkopf gefördert. Im Druckkopf wird das Aufbaumaterial dann mittels einer Heizeinrichtung aufgeschmolzen.

Das geschmolzene Aufbaumaterial wird auf einen Austragsort ausgetragen. Beim Austragsort kann es sich um einen Träger für den aufzubauenden Gegenstand handeln. Dieses ist typischerweise der Fall für den ersten Durchlauf des schichtweisen Aufbaus des Gegenstands. Im weiteren Verlauf des Aufbaus des Gegenstands ist der Austragsort typischerweise eine zuvor abgelegte Schicht des Aufbaumaterials. Den Prinzipien der additiven Fertigung folgend geschieht das Austragen entsprechend einem ausgewählten Querschnitt des herzustellenden Gegenstands.

Zur Beschreibung des Austragsvorgangs wird eine Austragsrate betrachtet, die den Stoffstrom des geschmolzenen Aufbaumaterials durch eine hierfür vorgesehene Öffnung des Druckkopfs (Düse) beschreibt. Die Austragsrate kann beispielsweise in mg Aufbaumaterial pro Sekunde angegeben werden. In einfachen, aber zweckmäßig konstruierten Druckköpfen lässt sich die Austragsrate direkt über die Vorschubgeschwindigkeit für das Aufbaumaterial steuern.

Ein weiterer Deskriptor des Austragsvorgangs ist die Geschwindigkeit, mit der sich der Druckkopf relativ zum Austragsort bewegt. Die Druckkopfgeschwindigkeit, beispielsweise in Zentimetern pro Sekunde, lässt sich über die Steuerungseinrichtung des 3D-Druckers kontrollieren.

Dem Konzept des FDM-Drucks entsprechend bewegt sich der Druckkopf (relativ) entlang eines vorbestimmten Pfades. Der Pfad entspricht an den Abschnitten, an denen Material aus dem Druckkopf ausgetragen wird, dem jeweiligen Querschnitt des herzustellenden Gegenstands. Ein geometrischer Deskriptor dieses Druckpfades ist die Krümmung des Pfades. Die Krümmung des Pfades ist bevorzugt so definiert, dass bei einem in einem x/y-Koordinatensystem verlaufenden Pfad die zweite Ableitung der y-Koordinate nach der x-Koordinate d²y/dx² die Krümmung darstellt. Eine Pfadkrümmung von Null entspricht einer geraden Linie. Das Vorzeichen einer von Null verschiedenen Krümmung wird durch die Positionierung des x/y-Koordinatensystems bestimmt, weswegen im Verfahren der Betrag der Krümmung als Steuerungsgröße zugrunde gelegt wird.

Im erfindungsgemäßen Verfahren steuert eine Steuerungseinheit wenigstens die Vorschubgeschwindigkeit für das Aufbaumaterial (zum Beispiel den Antrieb des Antriebsrades), die Heizeinrichtung in dem Druckkopf und die (relative) Bewegung des Druckkopfes. Dieses erfolgt vorzugsweise nicht nur binär (an/aus), sondern graduell, beispielsweise über eine Pulsweitenmodulation.

Es ist erfindungsgemäß vorgesehen, dass die Steuerungseinheit in Abhängigkeit der Pfadkrümmung den 3D-Druckvorgang beeinflusst. Auf diese Weise kann an Orten entlang des Pfades, an denen ohne Präzisionsverlust Aufbaumaterial schneller ausgetragen werden kann, dieses auch geschehen. Umgekehrt kann an Orten entlang des Pfades, an denen ein filigranerer Druckvorgang angezeigt ist, mit der gebotenen Präzision gearbeitet werden.

Die Steuerungseinheit steuert die (relative) Bewegung des Druckkopfes negativ korreliert mit dem Betrag der Pfadkrümmung: die (relative) Bewegung des Druckkopfes und der Betrag der Pfadkrümmung sind gegenläufig. Wenn der Betrag der Pfadkrümmung steigt, sinkt die Geschwindigkeit, mit der der Druckkopf eine relative Bewegung erfährt. Auf wenig gekrümmten oder geraden Strecken bewegt sich (relativ) der Druckkopf schneller als in kurvigen Abschnitten des Pfades. Das Gleiche gilt für die Austragsrate des geschmolzenen Aufbaumaterials, welche über die Vorschubgeschwindigkeit bestimmt wird: kann sich der Druckkopf schneller bewegen, muss mehr Material gefördert werden. Ebenso muss die Heizeinrichtung die erhöhte Materialanforderung auch bewältigen können, so dass bei erhöhter Vorschubgeschwindigkeit und/oder erhöhter (relativer) Druckkopfgeschwindigkeit auch eine entsprechende Heizleistung zum Aufschmelzen des Aufbaumaterials zur Verfügung gestellt werden kann.

Im einfachsten Fall kann die Beziehung zwischen Pfadkrümmung und (relativer) Bewegung des Druckkopfes eine lineare Beziehung sein. Dann sind die Pfadkrümmung und (relative) Bewegung des Druckkopfes über einen konstanten Proportionalitätsfaktor miteinander verknüpft. Das Gleiche gilt für die Verknüpfung zwischen Pfadkrümmung und Vorschubgeschwindigkeit für das Aufbaumaterial sowie Temperatur der Heizeinrichtung.

Es ist möglich, dass die Steuerungseinheit die Krümmung des Druckpfades anpasst, um bei sehr spitzen Kurven eine dem Druckvorgang zugutekommende Glättung einzuführen.

Insgesamt ermöglicht das erfindungsgemäße Verfahren somit eine Steigerung der Effizienz in FDM-Verfahren, ohne dass Kompromisse bei der Genauigkeit des 3D-Drucks eingegangen werden müssen.

In einer bevorzugten Ausführungsform des Verfahrens wird die negative Korrelation der Geschwindigkeit, mit welcher der Druckkopf eine relative Bewegung erfährt, mit dem Betrag der Krümmung des Pfades durch eine nicht-lineare Funktion ausgedrückt wird. Geeignete Funktionen sind insbesondere solche, welche keine Wendestellen aufweisen und eindeutig bleiben. Beispiele hierfür sind quadratische oder exponentielle Funktionen. Dass die Funktionen stetig sind, ist keine Voraussetzung dafür, dass sie erfindungsgemäß geeignet sind. Erfindungsgemäß mit eingeschlossen sind zusammengesetzte Funktionen, deren einzelne Abschnitte verschiedene Bereiche der Pfadkrümmungen betreffen.

In einer weiteren bevorzugten Ausführungsform des Verfahrens wird die negative Korrelation der Vorschubgeschwindigkeit für das Aufbaumaterial mit dem Betrag der Krümmung des Pfades durch eine nicht-lineare Funktion ausgedrückt. Geeignete Funktionen sind insbesondere solche, welche keine Wendestellen aufweisen und eindeutig bleiben. Beispiele hierfür sind quadratische oder exponentielle Funktionen. Dass die Funktionen stetig sind, ist keine Voraussetzung dafür, dass sie erfindungsgemäß geeignet sind. Erfindungsgemäß mit eingeschlossen sind zusammengesetzte Funktionen, deren einzelne Abschnitte verschiedene Bereiche der Pfadkrümmungen betreffen.

In einer weiteren bevorzugten Ausführungsform des Verfahrens wird die positive Korrelation der Temperatur der Heizeinrichtung zu der Vorschubgeschwindigkeit für das Aufbaumaterial durch eine nicht-lineare Funktion ausgedrückt. Geeignete Funktionen sind insbesondere solche, welche keine Wendestellen aufweisen und eindeutig bleiben. Beispiele hierfür sind quadratische oder exponentielle Funktionen. Dass die Funktionen stetig sind, ist keine Voraussetzung dafür, dass sie erfindungsgemäß geeignet sind. Erfindungsgemäß mit eingeschlossen sind zusammengesetzte Funktionen, deren einzelne Abschnitte verschiedene Bereiche der Pfadkrümmungen betreffen.

In einer weiteren bevorzugten Ausführungsform des Verfahrens wird die positive Korrelation der Temperatur der Heizeinrichtung zu der Geschwindigkeit, mit der der Druckkopf eine relative Bewegung erfährt, durch eine nicht-lineare Funktion ausgedrückt. Beispiele hierfür sind quadratische oder exponentielle Funktionen.

Die Temperaturanpassung in der Heizeinrichtung in Abhängigkeit von der relativen Geschwindigkeit des Druckkopfes kann auch mit einem Tiefpass-Filter versehen werden. Beispielsweise kann eine vorausberechnete durchschnittliche relative Geschwindigkeit des Druckkopfes der nächsten 2 Sekunden oder der nächsten 5 Sekunden während des Druckvorganges als Berechnungsgrundlage herangezogen werden. Dadurch wird ein weiteres prädiktives Element in dem erfindungsgemäßen Verfahren realisiert.

In einer weiteren bevorzugten Ausführungsform unterscheidet die Steuerungseinheit zwischen Bereichen des herzustellenden Gegenstandes, welche beim fertigen Gegenstand von außen sichtbar sind und Bereichen, welche von außen nicht sichtbar sind. Die nicht sichtbaren Bereiche werden hierbei mit einer höheren relativen Geschwindigkeit des Druckkopfes gefertigt als vergleichbare sichtbare Bereiche. So kann bei Abschnitten, auf denen es nicht auf das äußere Erscheinungsbild ankommt, die Fertigungszeit verringert werden.

In einer weiteren bevorzugten Ausführungsform enthält diese nicht-lineare Funktion Terme, welche ausgewählt sind aus der schergeschwindigkeitsabhängigen Viskosität des Aufbaumaterials, der temperaturabhängigen Viskosität des Aufbaumaterials, der Wärmekapazität des Aufbaumaterials, des Wärmetransportkoeffizienten des Aufbaumaterials, der für einen Wärmeaustausch zwischen Druckkopf und Aufbaumaterial zur Verfügung stehenden Oberfläche, dem Wärmeübergangskoeffizient zwischen Druckkopf und Aufbaumaterial oder einer Kombination von zwei oder mehreren solcher Terme. Hinsichtlich der für einen Wärmeaustausch zwischen Druckkopf und Aufbaumaterial zur Verfügung stehenden Oberfläche ist es weiter bevorzugt, dass hierbei die innere Oberfläche des Druckkopfes betrachtet wird, bei der das Aufbaumaterial mit dem Druckkopf in Kontakt kommt und welche eine Temperatur um ≥ 5°C oberhalb der örtlichen Aufbaumaterialtemperatur hat.

In einer weiteren bevorzugten Ausführungsform des Verfahrens ist die Steuerungseinheit eingerichtet, um anhand wenigstens eines zuvor festgelegten Kriteriums zu erkennen, ob die Austragsrate des Aufbaumaterials um mehr als einen vorbestimmten Betrag eine vorbestimmte Austragsrate unterschreitet und bei Erfüllen des wenigstens einen Kriteriums wenigstens eine vorbestimmte Handlung ablaufen zu lassen. Auf diese Weise kann eine Störung im Druckvorgang erkannt und behoben werden.

Vorzugsweise ist die wenigstens eine vorbestimmte Handlung ausgewählt aus: Befreien der Düse von in der Düse vorliegenden Verstopfungen, Verringern der Antriebsgeschwindigkeit des Antriebsrades, Erhöhen der Temperatur in der Heizeinrichtung oder einer Kombination hiervon.

Ebenfalls vorzugsweise ist das wenigstens eine zuvor festgelegte Kriterium ausgewählt aus: fehlerhafte Förderung des Aufbaumaterials (zum Beispiel eine Drehzahldifferenz zwischen dem Antriebsrad und dem zweiten Rad), ein Überschreiten eines zuvor festgelegten Drucks innerhalb des Druckkopfs oder einer Kombination hiervon.

In einer weiteren bevorzugten Ausführungsform des Verfahrens ermittelt die Steuerungseinheit für einen Ort, welcher eine vorbestimmte Strecke entlang des Pfades vor dem Druckkopf liegt, die Krümmung des Pfades an diesem Ort ermittelt und legt die Temperatur der Heizeinrichtung entsprechend einer vorbestimmten Funktion fest. Diese Variante enthält somit ein prädiktives Element. Auf diese Weise kann eine zeitliche Verzögerung zwischen Beginn der Erhöhung der Heizleistung und Temperaturerhöhung des Aufbaumaterials im Druckkopf ausgeglichen werden. Ebenso kann vorausschauend die Temperatur erniedrigt werden, wenn im weiteren Verlauf des Pfades eine niedrigere Temperatur des aufgeschmolzenen Aufbaumaterials angezeigt ist.

In einer weiteren bevorzugten Ausführungsform des Verfahrens werden Korrelationsfaktoren für

die negative Korrelation der Geschwindigkeit, mit der der Druckkopf eine relative Bewegung erfährt, mit dem Betrag der Krümmung,

die negative Korrelation der Vorschubgeschwindigkeit mit dem Betrag der Krümmung und/oder

die positive Korrelation der Temperatur der Heizeinrichtung mit der Vorschubgeschwindigkeit für das Aufbaumaterial und/oder mit der Geschwindigkeit, mit der der Druckkopf eine relative Bewegung erfährt

vor und/oder während des erfindungsgemäßen Verfahrens durch eine Kalibrierung einer im erfindungsgemäßen Verfahren eingesetzten additiven Schmelzschichtungsmaschine ermittelt.

Ein weiterer Aspekt der vorliegenden Erfindung ist eine Steuerungseinheit zur Verwendung in einer Anlage zur Durchführung eines additiven Schmelzschichtungsverfahrens mit einem filamentförmigen Aufbaumaterial, wobei das Verfahren die Schritte umfasst:
- Bereitstellen des Aufbaumaterials;
- Fördern des Aufbaumaterials in einen Druckkopf mit einer Vorschubgeschwindigkeit für das Aufbaumaterial (wobei vorzugsweise das Aufbaumaterial zwischen einem angetriebenen Antriebsrad und einem zweiten Rad gefördert wird);
- Schmelzen des Aufbaumaterials mittels einer Heizeinrichtung in dem Druckkopf;
- Austragen des geschmolzenen Aufbaumaterials auf einen Austragsort, entsprechend einem ausgewählten Querschnitt des herzustellenden Gegenstands,
   mit einer Austragsrate
      durch eine Öffnung des Druckkopfs,
      unter relativer Bewegung des Druckkopfes zum Austragsort
   mit einer vorbestimmten Bewegungsgeschwindigkeit
      entlang eines vorbestimmten Pfades,
      wobei der Pfad an jedem Ort eine Krümmung aufweist, welche einen positiven Wert, Null oder einen negativen Wert einnehmen kann;
und wobei die Steuerungseinheit wenigstens die Förderung des Aufbaumaterials, die Heizeinrichtung in dem Druckkopf und die Bewegung des Druckkopfes steuert.

Die Steuerungseinheit ist eingerichtet, um in Abhängigkeit der Krümmung des Pfades an dem Ort, an dem der Druckkopf sich während seiner relativen Bewegung zum Austragsort befindet:
die relative Bewegung des Druckkopfes derart zu steuern, dass
   die Geschwindigkeit, mit der der Druckkopf eine relative Bewegung erfährt,
   negativ mit dem Betrag der Krümmung korreliert,
die Vorschubgeschwindigkeit für das Aufbaumaterial derart zu steuern, dass
   die Vorschubgeschwindigkeit
   negativ mit dem Betrag der Krümmung korreliert und
die Heizeinrichtung im Druckkopf derart zu steuern, dass
   die Temperatur der Heizeinrichtung
   positiv mit der Vorschubgeschwindigkeit für das Aufbaumaterial und/oder
   positiv mit der Geschwindigkeit, mit der der Druckkopf eine relative Bewegung erfährt, korreliert.

Es ist ferner möglich, dass die Steuerungseinheit eingerichtet ist, um zuvor beschriebene bevorzugte Ausführungsformen des erfindungsgemäßen Verfahrens ebenfalls ablaufen zu lassen.

Aspekte des erfindungsgemäßen Verfahrens werden anhand der nachfolgenden Figuren weiter erläutert, ohne jedoch darauf beschränkt zu sein. Es zeigen:
- FIG. 1: eine nicht-lineare Kennlinie für ein Aufbaumaterial
- FIG. 2: ein Flussdiagramm im erfindungsgemäßen Verfahren
- FIG. 3: ein weiteres Flussdiagramm im erfindungsgemäßen Verfahren
- FIG. 4: ein weiteres Flussdiagramm im erfindungsgemäßen Verfahren

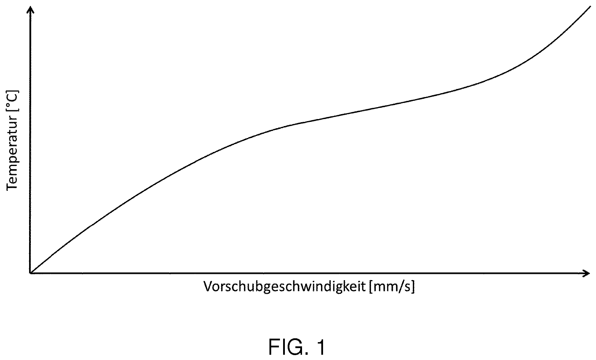

FIG. 1 zeigt eine nicht-lineare Kennlinie für ein Aufbaumaterial. Die positive Korrelation der Temperatur der Heizeinrichtung mit der Vorschubgeschwindigkeit für das Aufbaumaterial kann für verschiedene Materialien in einer für die Steuerungseinheit zugänglichen Datenbank hinterlegt sein. Ein anderes Beispiel für ein nicht-lineare Kennlinie ist eine exponentiell ansteigende Kennlinie, welche bei geringen Vorschubgeschwindigkeiten eine geringe Temperatursteigerung angibt und, den Gesetzmäßigkeiten des exponentiellen Wachstums folgend, bei höheren Vorschubgeschwindigkeiten eine starke Temperatursteigerung.

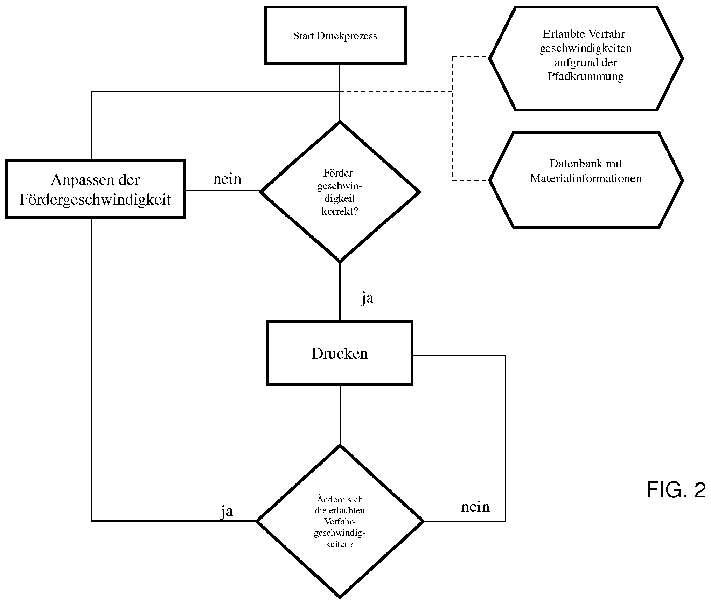

FIG. 2 zeigt ein Flussdiagramm im Zusammenhang mit dem erfindungsgemäßen Verfahren. Dieses Flussdiagramm betrifft den Aspekt der Anpassung der Fördergeschwindigkeit für das Aufbaumaterial in den Druckkopf. Der Begriff "Fördergeschwindigkeit" wird hierbei synonym zu "Vorschubgeschwindigkeit" benutzt. Generell steuert die Steuereinheit die Vorschubgeschwindigkeit für das Aufbaumaterial derart, dass die Vorschubgeschwindigkeit negativ mit dem Betrag der Krümmung des Druckpfades korreliert. Zu Beginn des 3D-Druckprozesses greift die Steuereinheit auf eine Datenbank mit Materialinformationen zu, welche die in FIG. 1 beispielhaft abgebildete Kennlinie enthalten kann. Weiterhin wird für die jeweils anliegende Krümmung des Druckpfades eine erlaubte Verfahrgeschwindigkeit für den Druckkopf ermittelt. Hierauf basierend wird eine Soll-Fördergeschwindigkeit für das Aufbaumaterial in den Druckkopf hinein ermittelt. In einem Regelkreislauf wird die Ist-Fördergeschwindigkeit (und damit indirekt die Austragsrate) mit dem Sollwert verglichen und bei Bedarf angepasst. Eine weitere Regelung betrifft die Verfahrgeschwindigkeit für den Druckkopf, welche ebenfalls kontinuierlich bestimmt und bei Bedarf angepasst wird. Dieses ist der Fall, wenn sich die Krümmung des Druckpfades ändert. Im Fall einer Änderung der erlaubten Verfahrgeschwindigkeit erfolgt automatisch auch eine Anpassung der Fördergeschwindigkeit.

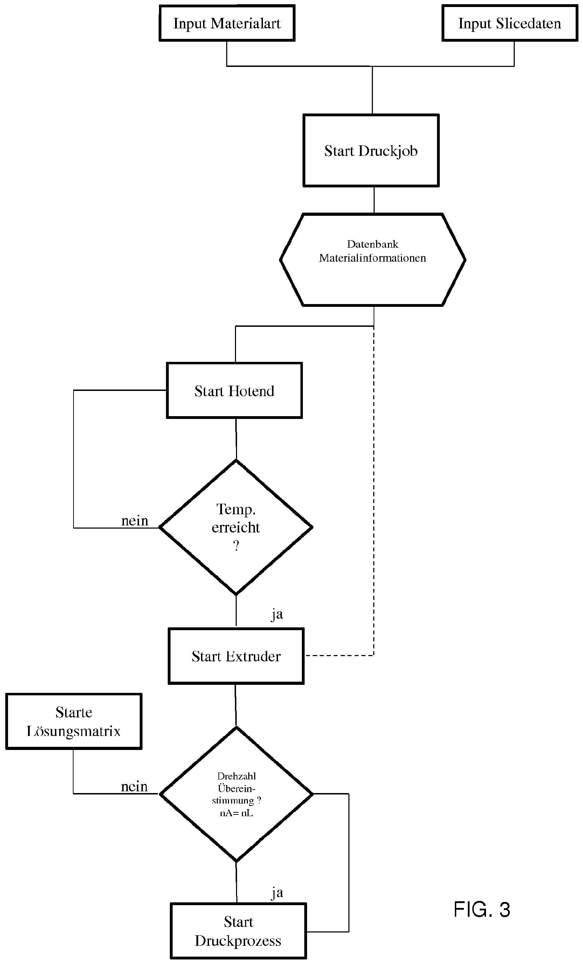

FIG. 3 zeigt ein weiteres Flussdiagramm im Zusammenhang mit dem erfindungsgemäßen Verfahren. Der Druckkopf ist hierbei in zwei funktionale Bereiche aufgeteilt: ein Hotend schmilzt das eingeführte Aufbaumaterial auf und ein Extruder fördert geschmolzenes Material nach außen. Zunächst lädt die Steuereinheit Informationen zu Material und Druckpfad (Slice-Daten) und regelt die Temperatur im Hotend auf einen Sollwert. Nach Erreichen des Sollwertes beginnt der Extrusionsvorgang, in dem hier die Drehzahl von einem angetriebenen Antriebsrad nA und einen nicht angetriebenen Antriebsrad nL im Druckkopf verglichen wird. Bei Übereinstimmung innerhalb eines vorgegebenen Toleranzfensters kann der eigentliche Druckvorgang durchgeführt werden. Ein Drehzahlunterschied ist ein Hinweis auf eine Störung im Druckkopf, so dass in diesem Fall eine Lösung in Form einer Lösungsmatrix mit unterschiedlichen Wegen zur Problembehebung aufgerufen wird.

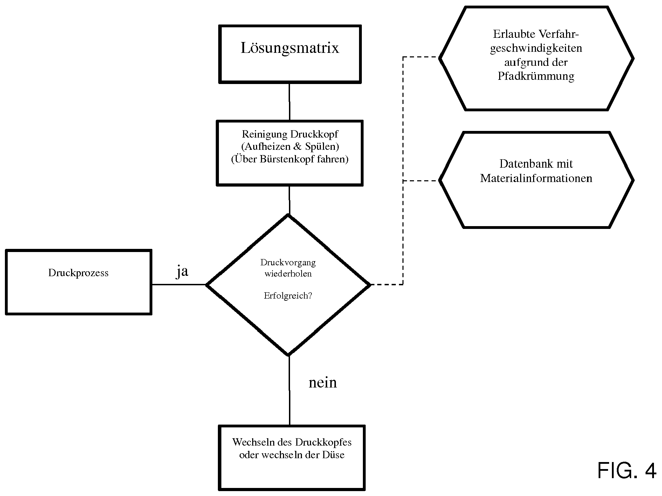

FIG. 4 zeigt ein weiteres Flussdiagramm im Zusammenhang mit dem erfindungsgemäßen Verfahren, in dem eine Methode zur Störungsbehandlung beschrieben wird. Wenn eine Störung erkannt wird, wird innerhalb einer Matrix mit hinterlegten Lösungen (Lösungsmatrix) eine passende Abhilfe ausgewählt. Im vorliegenden Fall beinhaltet die Abhilfe die Reinigung des Druckkopfes durch Aufheizen und Spülen, beispielsweise durch Fahren des Druckkopfes über einen außerhalb des Druckbereichs für den Gegenstand befindlichen Bürstenkopf. Nach Beendigung des Reinigungsvorgangs wird der unterbrochene Druckvorgang wiederholt. Zur Entscheidung, ob dieses erfolgreich war, werden auch die erlaubten Verfahrgeschwindigkeiten aufgrund der Druckpfadkrümmung und eine Datenbank mit Informationen über das Aufbaumaterial herangezogen. Im Fall eines erfolgreichen Überwindens der Störung wird der Druckprozess wie geplant fortgesetzt. Anderenfalls wird vorgeschlagen, den Druckkopf oder die Druckdüse auszutauschen.

## Patentansprüche

1. Verfahren zur Herstellung eines Gegenstands aus einem filamentförmigen Aufbaumaterial in einem additiven Schmelzschichtungsverfahren, umfassend die Schritte:
- Bereitstellen des Aufbaumaterials;
- Fördern des Aufbaumaterials in einen Druckkopf mit einer Vorschubgeschwindigkeit für das Aufbaumaterial;
- Schmelzen des Aufbaumaterials mittels einer Heizeinrichtung in dem Druckkopf;
- Austragen des geschmolzenen Aufbaumaterials auf einen Austragsort, entsprechend einem ausgewählten Querschnitt des herzustellenden Gegenstands,
mit einer Austragsrate
durch eine Öffnung des Druckkopfs,
unter relativer Bewegung des Druckkopfes zum Austragsort
mit einer vorbestimmten Bewegungsgeschwindigkeit
entlang eines vorbestimmten Pfades,
wobei der Pfad an jedem Ort eine Krümmung aufweist, welche einen positiven Wert, Null oder einen negativen Wert einnehmen kann;
wobei eine Steuerungseinheit wenigstens die Förderung des Aufbaumaterials, die Heizeinrichtung in dem Druckkopf und die Bewegung des Druckkopfes steuert; wobei in Abhängigkeit der Krümmung des Pfades an dem Ort, an dem der Druckkopf sich während seiner relativen Bewegung zum Austragsort befindet:
die Steuerungseinheit die relative Bewegung des Druckkopfes derart steuert, dass die Geschwindigkeit, mit der der Druckkopf eine relative Bewegung erfährt, negativ mit dem Betrag der Krümmung korreliert,
die Steuereinheit die Vorschubgeschwindigkeit für das Aufbaumaterial derart steuert, dass
die Vorschubgeschwindigkeit
negativ mit dem Betrag der Krümmung korreliert und
**dadurch gekennzeichnet, dass**
die Steuerungseinheit die Heizeinrichtung im Druckkopf derart steuert, dass die Temperatur der Heizeinrichtung positiv mit der Vorschubgeschwindigkeit für das Aufbaumaterial und/oder positiv mit der Geschwindigkeit, mit der der Druckkopf eine relative Bewegung erfährt, korreliert.

2. Verfahren gemäß Anspruch 1, **dadurch gekennzeichnet, dass** das Aufbaumaterial zwischen einem angetriebenen Antriebsrad und einem zweiten Rad gefördert wird.

3. Verfahren gemäß Anspruch 1 oder 2, **dadurch gekennzeichnet, dass** die negative Korrelation der Geschwindigkeit, mit welcher der Druckkopf eine relative Bewegung erfährt, mit dem Betrag der Krümmung des Pfades durch eine nicht-lineare Funktion ausgedrückt wird.

4. Verfahren gemäß einem der Ansprüche 1 bis 3, **dadurch gekennzeichnet, dass** die negative Korrelation der Vorschubgeschwindigkeit für das Aufbaumaterial mit dem Betrag der Krümmung des Pfades durch eine nicht-lineare Funktion ausgedrückt wird.

5. Verfahren gemäß einem der Ansprüche 1 bis 4, **dadurch gekennzeichnet, dass** die positive Korrelation der Temperatur der Heizeinrichtung mit der Vorschubgeschwindigkeit für das Aufbaumaterial durch eine nicht-lineare Funktion ausgedrückt wird.

6. Verfahren gemäß einem der Ansprüche 1 bis 5, **dadurch gekennzeichnet, dass** die positive Korrelation der Temperatur der Heizeinrichtung mit der Geschwindigkeit, mit der der Druckkopf eine relative Bewegung erfährt, durch eine nicht-lineare Funktion ausgedrückt wird.

7. Verfahren gemäß Anspruch 6, **dadurch gekennzeichnet, dass** die nicht-lineare Funktion Terme enthält, welche ausgewählt sind aus der schergeschwindigkeitsabhängigen Viskosität des Aufbaumaterials, der temperaturabhängigen Viskosität des Aufbaumaterials, der Wärmekapazität des Aufbaumaterials, des Wärmetransportkoeffizienten des Aufbaumaterials, der für einen Wärmeaustausch zwischen Druckkopf und Aufbaumaterial zur Verfügung stehenden Oberfläche, dem Wärmeübergangskoeffizient zwischen Druckkopf und Aufbaumaterial oder einer Kombination von zwei oder mehreren solcher Terme.

8. Verfahren gemäß einem der Ansprüche 1 bis 7, **dadurch gekennzeichnet, dass** die Steuerungseinheit eingerichtet ist, um anhand wenigstens eines zuvor festgelegten Kriteriums zu erkennen, ob die Austragsrate des Aufbaumaterials um mehr als einen vorbestimmten Betrag eine vorbestimmte Austragsrate unterschreitet und bei Erfüllen des wenigstens einen Kriteriums wenigstens eine vorbestimmte Handlung ablaufen zu lassen.

9. Verfahren gemäß Anspruch 8, **dadurch gekennzeichnet, dass** die wenigstens eine vorbestimmte Handlung ausgewählt ist aus: Befreien der Düse von in der Düse vorliegenden Verstopfungen, Verringern der Antriebsgeschwindigkeit des Antriebsrades, Erhöhen der Temperatur in der Heizeinrichtung oder einer Kombination hiervon.

10. Verfahren gemäß Anspruch 8 oder 9, **dadurch gekennzeichnet, dass** das wenigstens eine zuvor festgelegte Kriterium ausgewählt ist aus: fehlerhafte Förderung des Aufbaumaterials, ein Überschreiten eines zuvor festgelegten Drucks innerhalb des Druckkopfs oder einer Kombination hiervon.

11. Verfahren gemäß einem der Ansprüche 1 bis 10, **dadurch gekennzeichnet, dass** die Steuerungseinheit für einen Ort, welcher eine vorbestimmte Strecke entlang des Pfades vor dem Druckkopf liegt, die Krümmung des Pfades an diesem Ort ermittelt und die Temperatur der Heizeinrichtung entsprechend einer vorbestimmten Funktion festlegt.

12. Verfahren gemäß einem der Ansprüche 1 bis 11, **dadurch gekennzeichnet, dass** Korrelationsfaktoren für
die negative Korrelation der Geschwindigkeit, mit der der Druckkopf eine relative Bewegung erfährt, mit dem Betrag der Krümmung,
die negative Korrelation der Vorschubgeschwindigkeit mit dem Betrag der Krümmung und/oder die positive Korrelation der Temperatur der Heizeinrichtung mit der Vorschubgeschwindigkeit für das Aufbaumaterial und/oder mit der Geschwindigkeit, mit der der Druckkopf eine relative Bewegung erfährt
vor und/oder während des Verfahrens durch eine Kalibrierung einer im Verfahren eingesetzten additiven Schmelzschichtungsmaschine ermittelt werden.

13. Steuerungseinheit zur Verwendung in einer Anlage zur Durchführung eines additiven Schmelzschichtungsverfahrens mit einem filamentförmigen Aufbaumaterial, wobei das Verfahren die Schritte umfasst:
- Bereitstellen des Aufbaumaterials;
- Fördern des Aufbaumaterials in einen Druckkopf mit einer Vorschubgeschwindigkeit für das Aufbaumaterial;
- Schmelzen des Aufbaumaterials mittels einer Heizeinrichtung in dem Druckkopf;
- Austragen des geschmolzenen Aufbaumaterials auf einen Austragsort, entsprechend einem ausgewählten Querschnitt des herzustellenden Gegenstands,
mit einer Austragsrate
durch eine Öffnung des Druckkopfs,
unter relativer Bewegung des Druckkopfes zum Austragsort
mit einer vorbestimmten Bewegungsgeschwindigkeit
entlang eines vorbestimmten Pfades,
wobei der Pfad an jedem Ort eine Krümmung aufweist, welche einen positiven Wert, Null oder einen negativen Wert einnehmen kann;
wobei die Steuerungseinheit wenigstens die Förderung des Aufbaumaterials, die Heizeinrichtung in dem Druckkopf und die Bewegung des Druckkopfes steuert; und wobei die Steuerungseinheit eingerichtet ist, um in Abhängigkeit der Krümmung des Pfades an dem Ort, an dem der Druckkopf sich während seiner relativen Bewegung zum Austragsort befindet:
die relative Bewegung des Druckkopfes derart zu steuern, dass
die Geschwindigkeit, mit der der Druckkopf eine relative Bewegung erfährt,
negativ mit dem Betrag der Krümmung korreliert,
die Vorschubgeschwindigkeit für das Aufbaumaterial derart zu steuern, dass
die Vorschubgeschwindigkeit
negativ mit dem Betrag der Krümmung korreliert und
**dadurch gekennzeichnet, dass**
die Steuerungseinheit eingerichtet ist, um die Heizeinrichtung im Druckkopf derart zu steuern, dass
die Temperatur der Heizeinrichtung
positiv mit der Vorschubgeschwindigkeit für das Aufbaumaterial und/oder
positiv mit der Geschwindigkeit, mit der der Druckkopf eine relative Bewegung erfährt, korreliert.

## Claims

1. Process for producing an article from a filamentary construction material in an additive fused deposition modeling process, comprising the following steps:
- supplying the construction material;
- delivering the construction material into a printhead at a feed rate for the construction material;
- melting the construction material by means of a heating device in the printhead;
- discharging the melted construction material to a discharge location in accordance with a selected cross section of the article to be produced,
at a discharge rate
through an orifice of the printhead,
with movement of the printhead relative to the discharge location
at a predetermined speed of movement
along a predetermined path,
wherein the path has at each location a curvature that can assume a positive value, zero or a negative value;
wherein a control unit controls at least the delivery of the construction material, the heating device in the printhead and the movement of the printhead;
wherein
in dependence on the curvature of the path at the location at which the printhead is situated during its movement relative to the discharge location:
the control unit controls the relative movement of the printhead in such a way that
the speed at which the printhead undergoes a relative movement,
correlates negatively with the absolute value of the curvature,
the control unit controls the feed rate for the construction material in such a way that
the feed rate
correlates negatively with the absolute value of the curvature, and
**characterized in that**
the control unit controls the heating device in the printhead in such a way that
the temperature of the heating device correlates positively with the feed rate for the construction material and/or positively with the speed at which the printhead undergoes a relative movement.

2. Process according to Claim 1, **characterized in that** the construction material is conveyed between a driven drive wheel and a second wheel.

3. Process according to Claim 1 or 2, **characterized in that** the negative correlation between the speed at which the printhead undergoes a relative movement and the absolute value of the curvature of the path is expressed by a nonlinear function.

4. Process according to any one of Claims 1 to 3, **characterized in that** the negative correlation between the feed rate for the construction material and the absolute value of the curvature of the path is expressed by a nonlinear function.

5. Process according to any one of Claims 1 to 4, **characterized in that** the positive correlation between the temperature of the heating device and the feed rate for the construction material is expressed by a nonlinear function.

6. Process according to any one of Claims 1 to 5, **characterized in that** the positive correlation between the temperature of the heating device and the speed at which the printhead undergoes a relative movement is expressed by a nonlinear function.

7. Process according to Claim 6, **characterized in that** the nonlinear function contains terms which are selected from the shear-rate-dependent viscosity of the construction material, the temperature-dependent viscosity of the construction material, the heat capacity of the construction material, the heat transfer coefficient of the construction material, the surface available for heat transfer between the printhead and the construction material, the heat transfer coefficient between the printhead and the construction material or a combination of two or more such terms.

8. Process according to any one of Claims 1 to 7, **characterized in that** the control unit is designed to detect, by means of at least one predefined criterion, whether the discharge rate of the construction material falls below a predetermined discharge rate by more than a predetermined amount and to allow at least one predetermined action to take place if the at least one criterion is satisfied.

9. Process according to Claim 8, **characterized in that** the at least one predetermined action is selected from the following: freeing the nozzle from blockages present in the nozzle, reducing the driving speed of the drive wheel, increasing the temperature in the heating device or a combination thereof.

10. Process according to Claim 8 or 9, **characterized in that** the at least one predefined criterion is selected from the following: incorrect delivery of the construction material, exceeding of a predefined pressure within the printhead or a combination thereof.

11. Process according to any one of Claims 1 to 10, **characterized in that** the control unit determines the curvature of the path at a location which is at a predetermined distance ahead of the printhead along the path and defines the temperature of the heating device in accordance with a predetermined function.

12. Process according to any one of Claims 1 to 11, **characterized in that** correlation factors for the negative correlation between the speed at which the printhead undergoes a relative movement and the absolute value of the curvature,
the negative correlation between the feed rate and the absolute value of the curvature and/or
the positive correlation between the temperature of the heating device and the feed rate for the construction material and/or the speed at which the printhead undergoes a relative movement
are determined before and/or during the process by calibration of an additive fused deposition modeling machine used in the process.

13. Control unit for use in a system for carrying out an additive fused deposition modeling process with a filamentary construction material, wherein the process comprises the following steps:
- supplying the construction material;
- delivering the construction material into a printhead at a feed rate for the construction material;
- melting the construction material by means of a heating device in the printhead;
- discharging the molten construction material to a discharge location in accordance with a selected cross section of the object to be produced,
at a discharge rate
through an orifice of the printhead,
with movement of the printhead relative to the discharge location
at a predetermined speed of movement
along a predetermined path,
wherein the path has at each location a curvature that can assume a positive value, zero or a negative value;
wherein the control unit controls at least the delivery of the construction material, the heating device in the printhead and the movement of the printhead;
and wherein
the control unit is designed, in dependence on the curvature of the path at the location at which the printhead is situated during its movement relative to the discharge location:
to control the relative movement of the printhead in such a way that
the speed at which the printhead undergoes a relative movement,
correlates negatively with the absolute value of the curvature,
to control the feed rate for the construction material in such a way that
the feed rate
correlates negatively with the absolute value of the curvature, and
**characterized in that**
the control unit is designed
to control the heating device in the printhead in such a way that
the temperature of the heating device correlates positively with the feed rate for the construction material and/or
positively with the speed at which the printhead undergoes a relative movement.

## Revendications

1. Procédé de fabrication d'un objet à partir d'un matériau de construction en forme de filament dans un procédé de stratification additive par fusion, comprenant les étapes suivantes :
- la fourniture du matériau de construction ;
- le transport du matériau de construction dans une tête d'impression à une vitesse d'avancement pour le matériau de construction ;
- la fusion du matériau de construction au moyen d'un appareil de chauffage dans la tête d'impression ;
- le déchargement du matériau de construction fondu à un emplacement de déchargement, conformément à une section transversale choisie de l'objet à fabriquer, à une vitesse de déchargement à travers une ouverture de la tête d'impression, avec un déplacement relatif de la tête d'impression jusqu'à l'emplacement de déchargement à une vitesse de déplacement prédéterminée le long d'un chemin prédéterminé, le chemin présentant à chaque emplacement une incurvation qui peut adopter une valeur positive, nulle ou négative ;
une unité de commande commandant au moins le transport du matériau de construction, l'appareil de chauffage dans la tête d'impression et le déplacement de la tête d'impression ;
en fonction de l'incurvation du chemin à l'emplacement où la tête d'impression se trouve pendant son déplacement relatif jusqu'à l'emplacement de déchargement :
l'unité de commande commandant le déplacement relatif de la tête d'impression de telle sorte que la vitesse à laquelle la tête d'impression subit un déplacement relatif soit corrélée négativement avec le montant de l'incurvation,
l'unité de commande commandant la vitesse d'avancement pour le matériau de construction de telle sorte la vitesse d'avancement soit corrélée négativement avec le montant de l'incurvation, et
**caractérisé en ce que**
l'unité de commande commande l'appareil de chauffage dans la tête d'impression de telle sorte que la température de l'appareil de chauffage soit corrélée positivement avec la vitesse d'avancement pour le matériau de construction et/ou positivement avec la vitesse à laquelle la tête d'impression subit un déplacement relatif.

2. Procédé selon la revendication 1, **caractérisé en ce que** le matériau de construction est transporté entre une roue d'entraînement entraînée et une deuxième roue.

3. Procédé selon la revendication 1 ou 2, **caractérisé en ce que** la corrélation négative de la vitesse à laquelle la tête d'impression subit un déplacement relatif avec le montant de l'incurvation du chemin est exprimée par une fonction non linéaire.

4. Procédé selon l'une quelconque des revendications 1 à 3, **caractérisé en ce que** la corrélation négative de la vitesse d'avancement pour le matériau de construction avec le montant de l'incurvation du chemin est exprimée par une fonction non linéaire.

5. Procédé selon l'une quelconque des revendications 1 à 4, **caractérisé en ce que** la corrélation positive de la température de l'appareil de chauffage avec la vitesse d'avancement pour le matériau de construction est exprimée par une fonction non linéaire.

6. Procédé selon l'une quelconque des revendications 1 à 5, **caractérisé en ce que** la corrélation positive de la température de l'appareil de chauffage avec la vitesse à laquelle la tête d'impression subit un déplacement relatif est exprimée par une fonction non linéaire.

7. Procédé selon la revendication 6, **caractérisé en ce que** la fonction non linéaire contient des termes qui sont choisis parmi la viscosité dépendante de la vitesse de cisaillement du matériau de construction, la viscosité dépendante de la température du matériau de construction, la capacité calorifique du matériau de construction, le coefficient de transport de chaleur du matériau de construction, la surface disponible pour un échange de chaleur entre la tête d'impression et le matériau de construction, le coefficient de transfert de chaleur entre la tête d'impression et le matériau de construction ou une combinaison de deux ou plus de ces termes.

8. Procédé selon l'une quelconque des revendications 1 à 7, **caractérisé en ce que** l'unité de commande est conçue pour reconnaître, à l'aide d'au moins un critère établi auparavant, si le taux de déchargement du matériau de construction passe en dessous d'un taux de déchargement prédéterminé de plus d'un montant prédéterminé et pour laisser au moins une action prédéterminée se dérouler lorsque l'au moins un critère est rempli.

9. Procédé selon la revendication 8, **caractérisé en ce que** l'au moins une action prédéterminée est choisie parmi : le dégagement de colmatages présents dans la buse, la réduction de la vitesse d'entraînement de la roue d'entraînement, l'élévation de la température dans l'appareil de chauffage ou une combinaison de celles-ci.

10. Procédé selon la revendication 8 ou 9, **caractérisé en ce que** l'au moins un critère établi auparavant est choisi parmi : un transport incorrect du matériau de construction, un dépassement d'une pression établie auparavant à l'intérieur de la tête d'impression ou une combinaison de ceux-ci.

11. Procédé selon l'une quelconque des revendications 1 à 10, **caractérisé en ce que** l'unité de commande détermine, pour un emplacement qui se situe à une distance prédéterminée le long du chemin avant la tête d'impression, l'incurvation du chemin à cet emplacement et établit la température de l'appareil de chauffage conformément à une fonction prédéterminée.

12. Procédé selon l'une quelconque des revendications 1 à 11, **caractérisé en ce que** des facteurs de corrélation pour
la corrélation négative de la vitesse à laquelle la tête d'impression subit un déplacement relatif avec le montant de l'incurvation,
la corrélation négative de la vitesse d'avancement avec le montant de l'incurvation et/ou
la corrélation positive de la température de l'appareil de chauffage avec la vitesse d'avancement pour le matériau de construction et/ou avec la vitesse à laquelle la tête d'impression subit un déplacement relatif
sont déterminés avant et/ou pendant le procédé par un calibrage d'une machine de stratification additive par fusion utilisée dans le procédé.

13. Unité de commande destinée à être utilisée dans une installation pour la réalisation d'un procédé de stratification additive par fusion avec un matériau de construction en forme de filament, le procédé comprenant les étapes suivantes :
- la fourniture du matériau de construction ;
- le transport du matériau de construction dans une tête d'impression à une vitesse d'avancement pour le matériau de construction ;
- la fusion du matériau de construction au moyen d'un appareil de chauffage dans la tête d'impression ;
- le déchargement du matériau de construction fondu à un emplacement de déchargement, conformément à une section transversale choisie de l'objet à fabriquer, à une vitesse de déchargement à travers une ouverture de la tête d'impression, avec un déplacement relatif de la tête d'impression jusqu'à l'emplacement de déchargement à une vitesse de déplacement prédéterminée le long d'un chemin prédéterminé, le chemin présentant à chaque emplacement une incurvation qui peut adopter une valeur positive, nulle ou négative ;
l'unité de commande commandant au moins le transport du matériau de construction, l'appareil de chauffage dans la tête d'impression et le déplacement de la tête d'impression ;
et l'unité de commande étant conçue pour, en fonction de l'incurvation du chemin à l'emplacement où la tête d'impression se trouve pendant son déplacement relatif jusqu'à l'emplacement de déchargement :
commander le déplacement relatif de la tête d'impression de telle sorte que la vitesse à laquelle la tête d'impression subit un déplacement relatif soit corrélée négativement avec le montant de l'incurvation,
commander la vitesse d'avancement pour le matériau de construction de telle sorte la vitesse d'avancement soit corrélée négativement avec le montant de l'incurvation, et
**caractérisée en ce que**
l'unité de commande est conçue pour commander l'appareil de chauffage dans la tête d'impression de telle sorte que la température de l'appareil de chauffage soit corrélée positivement avec la vitesse d'avancement pour le matériau de construction et/ou positivement avec la vitesse à laquelle la tête d'impression subit un déplacement relatif.
